# EUROPEAN PATENT SPECIFICATION

(11) **EP 2 566 012 B1**
(45) Date of publication and mention of the grant of the patent: **20.12.2017**
(21) Application number: 11008459.7
(22) Date of filing: 21.10.2011
(51) Int. Cl.: H02K 3/26

(54) **Motor stator**
Motorstator
Stator de moteur

(30) Priority: 31.08.2011 TW 100131241
(43) Date of publication of application: 06.03.2013
(73) Proprietor: Sunonwealth Electric Machine Industry Co., Ltd., Kaohsiung, Taiwan R.O.C. (TW)
(72) Inventor: Shan, Duo-Nian, Kaohsiung Taiwan (TW); Zheng, Yuan-Jie, Kaohsiung Taiwan (TW)
(74) Representative: Köhler, Walter

(56) References cited:
- EP-A1- 2 296 255
- TW-A- 201 123 686
- US-A- 6 005 324

## Description

### BACKGROUND OF THE INVENTION

### 1. Field of the Invention

The present invention generally relates to a motor stator and, more particularly, to a motor stator having an electrical connection module penetrating a plurality of wiring layers to lower complexity in circuit arrangement.

### 2. Description of the Related Art

In the current trend of miniaturization for electrical devices, cooling fans disposed inside miniaturized electrical devices to drive air currents for cooling have to be smaller than conventional fans. Furthermore, in the design and manufacture of a miniaturized fan, the way to form a motor with great power and strong structure has become a critical factor in fan miniaturization. In detail, there are motor stators with its stator coils formed on a circuit board by PCB layout or electroforming, since conventional motor stators formed by conventional winding coils are hard to fill light and thin requirements. Besides, in order to provide a large transient power for motor operation, a multi-layer-board with coil circuits arranged on each layer to perform a motor stator has also been used.

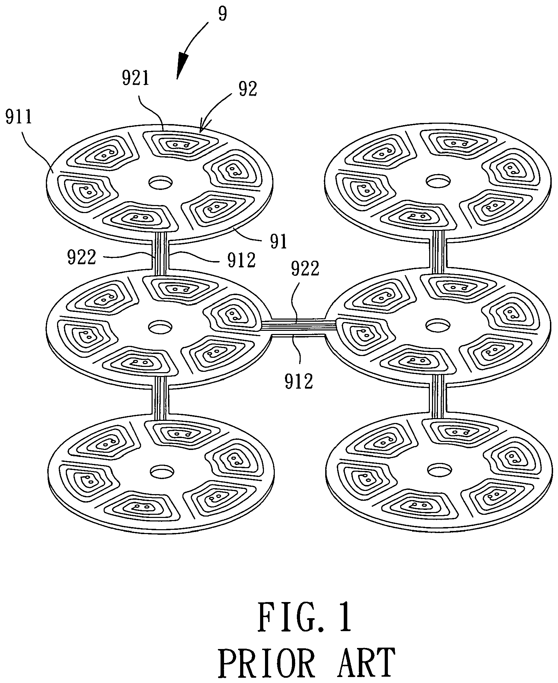

For example, a motor stator completed by plural layers with coil circuits is disclosed by an invention of Taiwan Patent Publication No. 201123686, which is entitled as "Winding Device with Axial Flux and a Motor Having the Winding Device," with the motor stator being numbered as "9" in Fig. 1. The motor stator 9 includes a flexible base 91 and a wiring module 92, wherein the flexible base 91 has a plurality of carriers 911 and a plurality of bridge portions 912, each of the carriers 911 supports a coil unit 921 of the wiring module 92, and each of the bridge portions 912 supports a connecting circuit 922 of the wiring module 92. Particularly, any one of the bridge portions 912 is connected between adjacent two of the carriers 911, and the connecting circuit 922 on the bridge portion 912 electrically links the coil units 921 on the two carriers 911. Moreover, the bridge portions 912 of the flexible base 91 are bent for the carriers 911 to align with each other in an axial direction of a rotor and the plurality of carriers 911 are arranged adjacent to the rotor when this motor stator and the rotor are assembled. Therefore, the coil units 921 generate magnet force to drive the rotor when the coil units 921 are energized.

However, this conventional motor stator has drawbacks such as low structural strength and low combination stability since the flexible base 91 is formed by flexible material. Besides, any bridge portion 912 connecting between two of the carriers 911 will be bent to a state having a small curvature once it is necessary to decrease the axial thickness of this motor stator, and this may cause damages to the bridge portion 912. Moreover, when the motor stator is assembled in a motor, with the bridge portions 912 bent and the carriers 911 aligned in a line, the bridge portions 912 protruding from radial peripheries of the carriers 911 may radially result in additional area for receiving the conventional motor stator. Furthermore, a circuit layout of the wiring module 92 should be complex since the wiring module 92 can be formed on only two opposite surfaces of the flexible base 91, and this complexity in circuit layout can lead to a low yield rate of the motor stator. Consequently, it is desired to improve the conventional motor stator. Further similar motor stator arrangements are disclosed in the publications US 6 005 324 A and EP 2 296 255 A1.

### SUMMARY OF THE INVENTION

It is therefore the primary objective of this invention to provide a motor stator having an electrical connection module electrically connecting winding modules of a plurality of wiring layers, so as to has decreased arranging space, desirable structural strength and combination stability, and low complexity in circuit layout.

The invention discloses a motor stator comprising a plurality of wiring layers and at least one electrical connection module. Each electrical connection module has a through conductor and at least one local

conductor, with the through conductor penetrating the plurality of wiring layers and electrically connecting with at least one of the at least one winding module of at least one of the plural wiring layers, with the at least one local conductor penetrating at least one of the plural wiring layers, and with each local conductor electrically connecting the winding modules of at least two of the plural wiring layers.

### BRIEF DESCRIPTION OF THE DRAWINGS

The present invention will become more fully understood from the detailed description given hereinafter and the accompanying drawings which are given by way of illustration only, and thus are not limitative of the present invention, and wherein:
Fig. 1 is a perspective view of a conventional motor stator completed by plural layers.
Fig. 2 is an exploded and perspective view of a motor stator according to a first practical example of a preferable embodiment of the invention.
Fig. 3 is a sketch and cross-sectional view of the motor stator according to the first practical example of the preferable embodiment of the invention.
Fig. 4 is an exploded and perspective view of an alternative motor stator according to the first practical example of the preferable embodiment of the invention.
Fig. 5 is a sketch and cross-sectional view of the alternative motor stator according to the first practical example of the preferable embodiment of the invention.
Fig. 6 shows a circuit diagram of the motor stator according to the first practical example with a parallel structure.
Fig. 7 shows a circuit diagram of the alternative motor stator according to the first practical example with a serial structure.
Fig. 8 is an exploded and perspective view of a motor stator according to a second practical example of the preferable embodiment of the invention.
Fig. 9 is an exploded and perspective view of an alternative motor stator according to the second practical example of the preferable embodiment of the invention.
Fig. 10 is an exploded and perspective view of a thin fan having the motor stator of the preferable embodiment of the invention.

In the various figures of the drawings, the same numerals designate the same or similar parts. Furthermore, when the term "first," "second," and similar terms are used hereinafter, it should be understood that these terms refer only to the structure shown in the drawings as it would appear to a person viewing the drawings, and are utilized only to facilitate describing the invention.

### DETAILED DESCRIPTION OF THE INVENTION

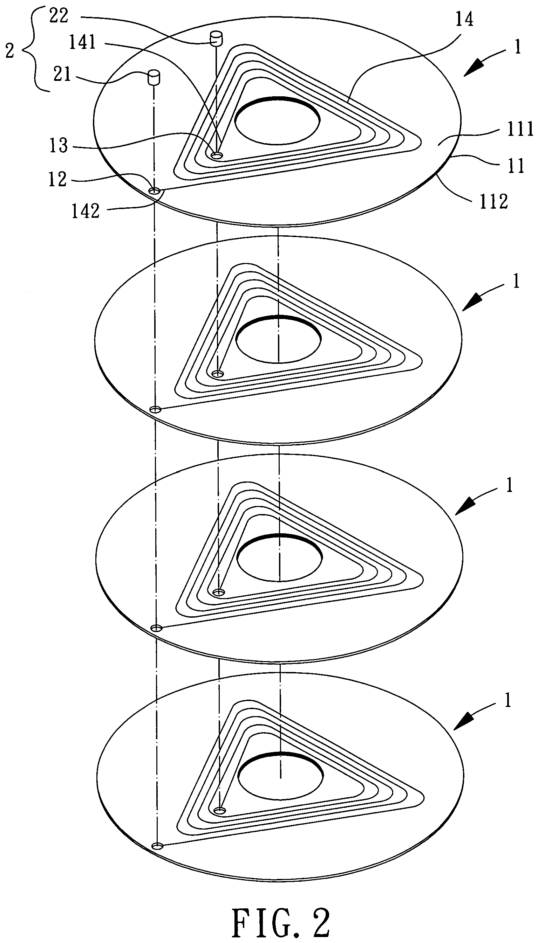

Referring to Figs. 2-5, for illustrating a preferable embodiment of the present invention, exploded and perspective views and sketch and cross-sectional views of a first practical example are shown, which is a motor stator of a multi-layer-board structure. The motor stator includes a plurality of wiring layers 1 and an electrical connection module 2 penetrating the plurality of wiring layers 1. Besides, the motor stator of the first practical example is designed to be applied to single-phase motors.

In detail, referring to Figs. 2 through 5, each of the wiring layers 1 includes an insulating base 11, a through hole 12, a conduction hole 13 and a winding module 14. The insulating base 11 has a supporting surface 111 and a bottom surface 112, which preferably form two opposite sides of the insulating base 11. The through hole 12 penetrates the insulating base 11 from the supporting surface 111 to the bottom surface 112, with the through holes 12 of all wiring layers 1 aligned with each other along an axial line and preferably having identical bores. The conduction hole 13 also penetrates the insulating base 11 from the supporting surface 111 to the bottom surface 112. The winding module 14 is arranged on the supporting surface 111 of the insulating base 11 and has a first end 141 and a second end 142, wherein the first end 141 extends to the conduction hole 13 while the second end 142 extends to the through hole 12, or the first end 141 does not extend to any one of the holes 12, 13 of this wiring layer 1 while the second end 142 extends to the conduction hole 13.

The electrical connection module 2 is preferably formed by electric conductive material, such as solder, implanted inside the through hole 12 or the conduction hole 13, with the electrical connection module 2 including a through conductor 21 and at least one local conductor 22. The through conductor 21 is disposed inside the through holes 12 of the plurality of wiring layers 1 to penetrate the plurality of wiring layers 1, and the through conductor 21 electrically connects with any second end 142 of the winding modules 14 that extends to any through hole 12 of the plural wiring layers 1. Each local conductor 22 is disposed inside at least one of the conduction holes 13 to penetrate at least one of the plural wiring layers 1. Besides, each local conductor 22 electrically connects with any first end 141 of the winding modules 14 that extends to one of the conduction holes 13, or electrically connects two first ends 141 of two winding modules 14, or electrically connects two second ends 142 of two winding modules 14 not in connection with any one of the local conductors 21.

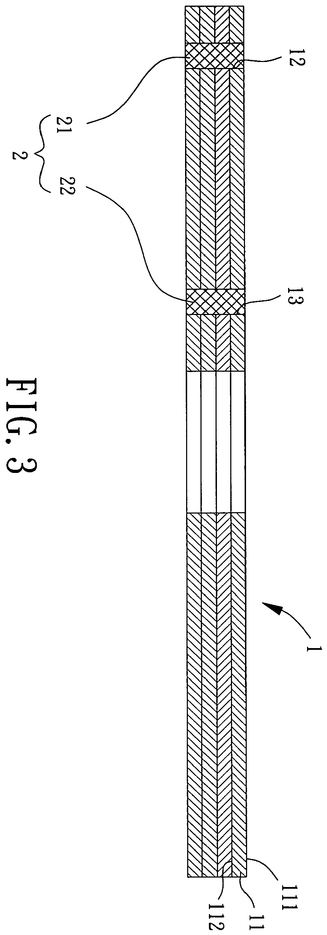

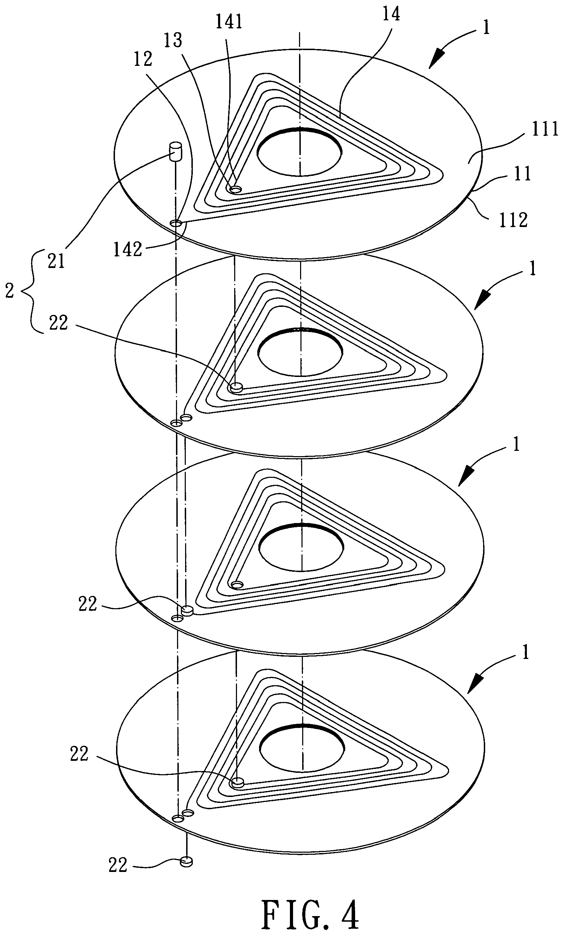

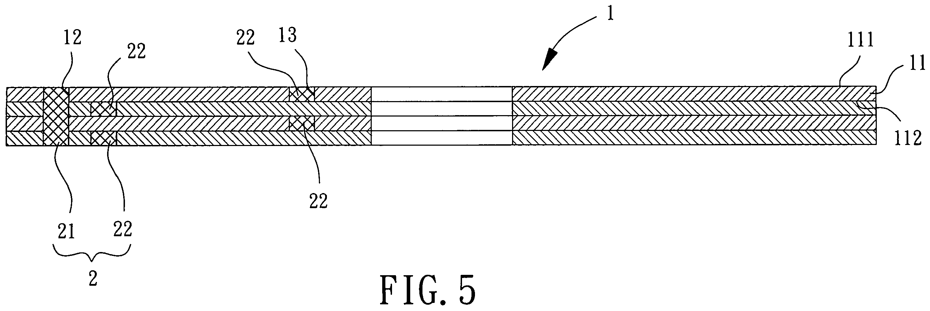

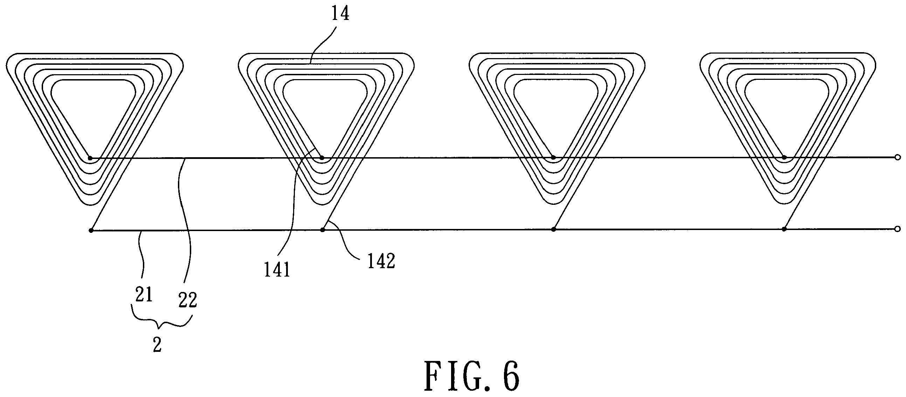

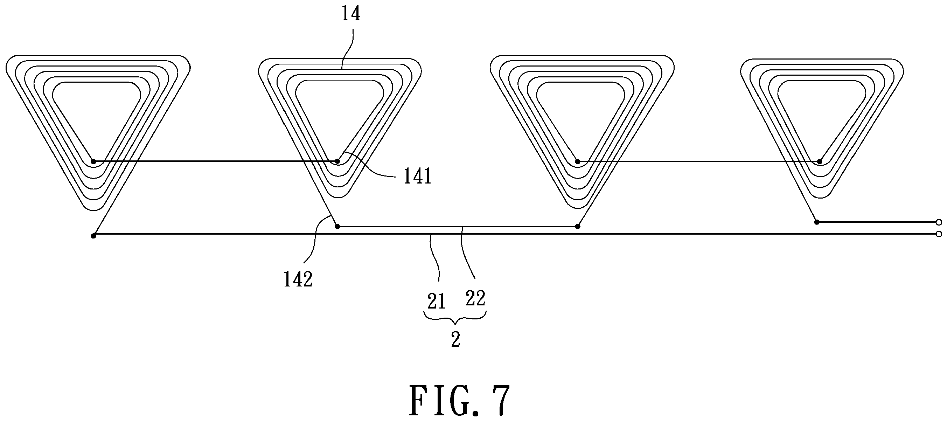

In detail, referring to Figs. 2 and 3, when the conduction holes 13 of
the plurality of wiring layers 1 are aligned with each other, the number of the at least one local conductor 22 is one, the local conductor 22 electrically connects with the first ends 141 of the winding modules 14 of the plurality of wiring layer 1, and the second ends 142 of the winding modules 14 of the plurality of wiring layer 1 extend to the through holes 12 and electrically connect with the through conductor 21, so as to complete a parallel structure of the winding modules 14 as shown in Fig. 6 by the electrical connection module 2. On the other hand, referring to Figs. 4 and 5, when the conduction holes 13 of the plurality of wiring layers 1 are staggered, the number of the at least one local conductor 22 is equal to that of the plural wiring layers 1, and any one of the local conductors 22 is received inside the conduction hole 13 of one of the plural wiring layers 1. Any one of the local conductors 22 electrically connects with the first end 141 of the winding module 14 extending to the conduction hole 13 receiving this local conductor 22 and another first end 141 of a winding module 14 of another wiring layer 1, or electrically connects with the second end 142 of the winding module 14 extending to the conduction hole 13 receiving this local conductor 22 and another second end 142 of a winding module 14 of another wiring layer 1. Therefore, when the through conductor 21 only electrically connects with the second end 142 of the winding module 14 of one of the plural wiring layers 1, a serial structure of the winding modules 14 as shown in Fig. 7 by the electrical connection module 2 is completed.

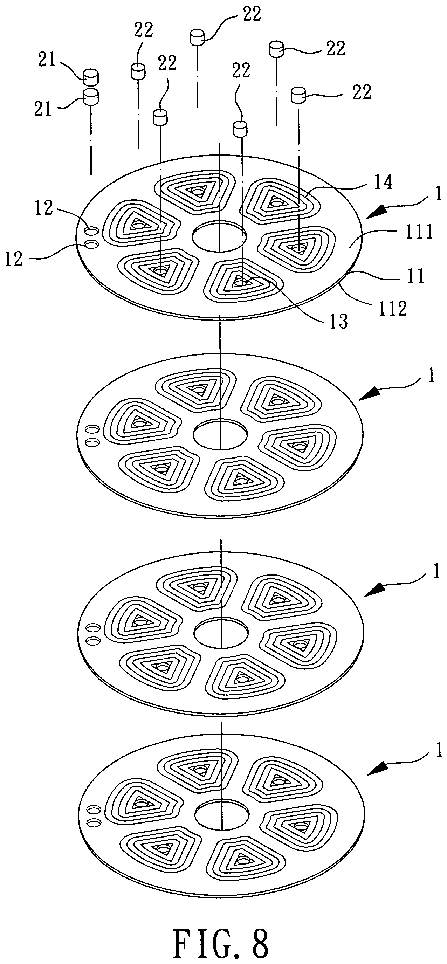

Please refer to Fig. 8, which illustrates an exploded and perspective view of a second practical example of the preferable embodiment of the present invention, and the motor stator of this second practical example is designed to be applied to multi-phase motors. In this second practical example, each wiring layer 1 has a plurality of through holes 12, a plurality of conduction holes 13 and a plurality of winding modules 14, with numbers of the plural through holes 12, conduction holes 13 and winding modules 14 being equal to or larger than the number of the phases of an applied multi-phase motor. For instance, if the motor stator of the present invention is applied to a two-phase motor as shown in Fig. 8, the number of the through holes 12 can be two, and the numbers of the conduction holes 13 and the winding modules 14 may be six. For the same reason, when the motor stator of the present invention is applied to a three-phase motor, the number of the through holes 12 of each wiring layer 1 should not be less than three. It should be noted that a connection between the winding modules 14 and the electrical connection module 2 for one phase current to pass through is similar to the connection of the first practical example.

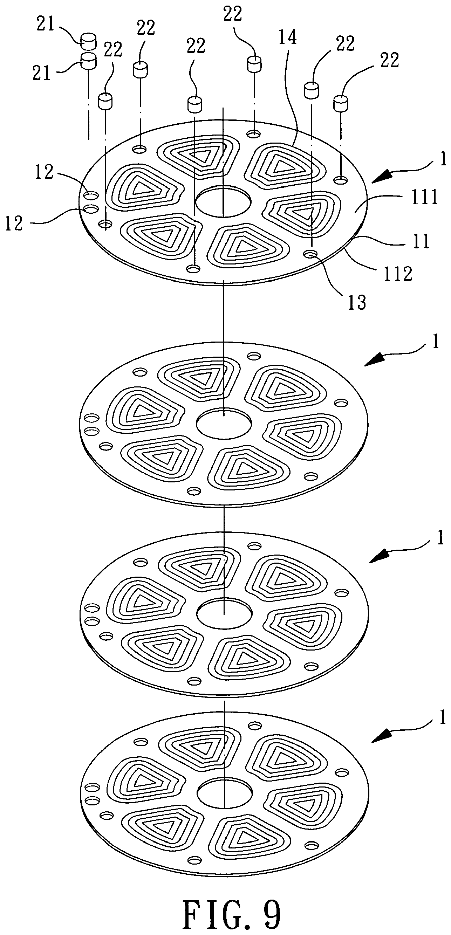

Moreover, referring to Fig. 8 again, regarding to a through conductor 21 and a local conductor 22 that are arranged for a single phase current to pass through, it is preferable to arrange the through conductor 21 and the local conductor 22 respectively on the inside and the outside of a coil of the winding module 14 for convenience of connection between the winding module 14 and the electrical connection module 2. Namely, the through conductor 21 is on one of the inside and the outside of the coil while the local conductor 22 is on the other one of them of the coil. Alternatively, referring to Fig. 9, regarding the through conductor 21 and local conductor 22 for a single phase current to pass through, both of the through conductor 21 and the local conductor 22 can be arranged outside the coil of the winding module 14 or inside the coil of the winding module 14.

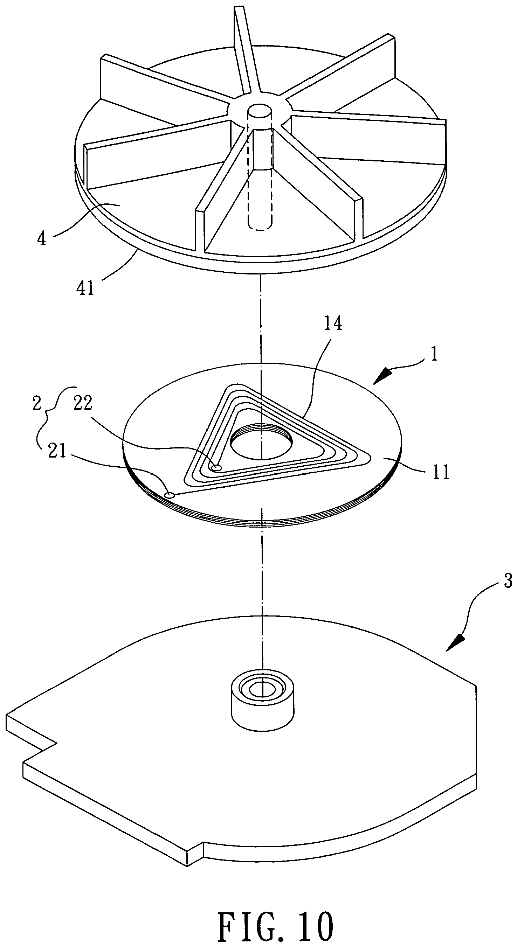

Referring to Fig. 10, an exploded and perspective view of a thin fan having the motor stator of the present invention is shown. The motor stator is mounted on a base seat 3 of the thin fan while the thin fan further provides a fan wheel 4 having a magnet surface 41 facing the motor stator, so as to rotate the fan wheel 4 when the winding modules 14 of the motor stator is energized.

In sum, with the electrical connection module 2 penetrating the plurality of wiring layer 1, the winding modules 14 can be electrically connected by the electrical connection module 2. Therefore, not only can the above structure prevent the electrical connection module 2 from damage caused by external force to maintain the normal operation of the motor stator, but it can also further decrease the required space for the motor stator. Moreover, the present invention can have desirable structural strength and combination stability since the insulating base 11 of the wiring layer 1 can be formed by a rigid board. Besides, the circuit layout of the present motor stator can be simple because each local conductor 22 penetrates at least one of the plural wiring layers 1 to electrically connect the winding modules 14 that are respectively formed on supporting surfaces 111 of different wiring layers 1, and thus may lead to a high yield rate of the motor stator.

Although the invention has been described in detail with reference to its presently preferable embodiment, it will be understood by one of ordinary skill in the art that various modifications can be made without departing from the scope of the invention, as set forth in the appended claims.

## Claims

1. A motor stator, comprising:
a plurality of wiring layers (1), with each wiring layer (1) having an insulating base (11) and a winding module (14) formed on the insulating base (11), with the winding module (14) including a plurality of side sections extending in different directions,
wherein the motor stator is **characterized in that** further comprises at least one electrical connection module (2), with each electrical connection module (2) having a through conductor (21) and at least one local conductor (22), with the through conductor (21) penetrating the plurality of wiring layers (1) and electrically connecting with the winding module (14) of at least one of the plural wiring layers (1), with the at least one local conductor (22) penetrating at least one of the plural wiring layers (1), and with each local conductor (22) electrically connecting the winding modules (14) of at least two of the plural wiring layers (1).

2. The motor stator as claimed in claim 1, **characterized in that** the plurality of side sections of each winding module (14) forms a coil, the through conductor (21) is on one of an inside and an outside of the coil while the at least one local conductor (22) is on the other one of the inside and outside of the coil.

3. The motor stator as claimed in claim 1, **characterized in that** the plurality of side sections of each winding module (14) forms a coil, and the through conductor (21) and the at least one local conductor (22) are arranged outside the coil.

4. The motor stator as claimed in claim 1, **characterized in that** the plurality of side sections of each winding module (14) forms a coil, and the through conductor (21) and the at least one local conductor (22) are arranged inside the coil.

5. The motor stator as claimed in claim 1, **characterized in that** the local conductor (22) penetrates the plurality of wiring layers (1), the winding module (14) of each wiring layer (1) has a first end (141) and a second end (142), the first end (141) electrically connects with the at least one local conductor (22), and the second end (142) electrically connects with the through conductor (21).

6. The motor stator as claimed in claim 1, **characterized in that** a number of the at least one local conductor (22) is equal to a number of the plural wiring layers (1), any one of the local conductors (22) penetrates one of the plural wiring layers (1), the winding module (14) of each wiring layer (1) has a first end (141) and a second end (142), any one of the local conductors (22) electrically connects with the first ends (141) or second ends (142) of the winding modules (14) of at least two of the plural wiring layers (1), the through conductor (21) electrically connects with the second end (142) of the winding module (14) of one of the plural wiring layers (1), and the second end (142) connecting with the through conductor (21) is separated from the at least one local conductor (22).

7. The motor stator as claimed in claim 1, **characterized in that** each of the wiring layer (1) has a supporting surface (111), a bottom surface (112) and at least one through hole (12) extending from the supporting surface (111) to the bottom surface (112), the through holes (12) of all wiring layers (1) are aligned with each other along at least one axial line, and the through conductor (21) is arranged in the through holes (12).

8. The motor stator as claimed in claim 1, **characterized in that** each of the wiring layer (1) has a supporting surface (111), a bottom surface (112) and at least one conduction hole (13) extending from the supporting surface (111) to the bottom surface (112), and the local conductor (22) is arranged in the conduction holes (13) of all wiring layers (1).

9. The motor stator as claimed in claim 1, **characterized in that** each wiring layer (1) has at least one other winding module, the numbers of the at least one electrical connection module (2) and the winding modules (14) of each wiring layer (1) are equal to or larger than a number of phases of a multi-phase motor using the motor stator.

## Patentansprüche

1. Motorstator, der Folgendes umfasst:
mehrere Verdrahtungsschichten (1), wobei jede Verdrahtungsschicht (1) eine isolierende Basis (11) und ein Wicklungsmodul (14), das auf der isolierenden Basis (11) gebildet ist, besitzt, wobei das Wicklungsmodul (14) mehrere Seitenabschnitte aufweist, die sich in verschiedene Richtungen erstrecken,
wobei der Motorstator **dadurch gekennzeichnet ist, dass** er ferner mindestens ein elektrisches Verbindungsmodul (2) umfasst, wobei jedes elektrische Verbindungsmodul (2) einen Durchgangsleiter (21) und mindestens einen lokalen Leiter (22) besitzt, wobei der Durchgangsleiter (21) die mehreren Verdrahtungsschichten (1) durchdringt und sich mit dem Wicklungsmodul (14) mindestens einer der mehreren Verdrahtungsschichten (1) elektrisch verbindet, wobei der mindestens eine lokale Leiter (22) in mindestens eine der mehreren Verdrahtungsschichten (1) eindringt und wobei jeder lokale Leiter (22) die Wicklungsmodule (14) mindestens zweier der mehreren Verdrahtungsschichten (1) elektrisch verbindet.

2. Motorstator nach Anspruch 1, **dadurch gekennzeichnet, dass** die mehreren Seitenabschnitte jedes Wicklungsmoduls (14) eine Spule bilden, wobei sich der Durchgangsleiter (21) auf einer Innenseite oder einer Außenseite der Spule befindet, während sich der mindestens eine lokale Leiter (22) auf der anderen der Innenseite und der Außenseite der Spule befindet.

3. Motorstator nach Anspruch 1, **dadurch gekennzeichnet, dass** die mehreren Seitenabschnitte jedes Wicklungsmoduls (14) eine Spule bilden und der Durchgangsleiter (21) und der mindestens eine lokale Leiter (22) außerhalb der Spule angeordnet sind.

4. Motorstator nach Anspruch 1, **dadurch gekennzeichnet, dass** die mehreren Seitenabschnitte jedes Wicklungsmoduls (14) eine Spule bilden und der Durchgangsleiter (21) und der mindestens eine lokale Leiter (22) innerhalb der Spule angeordnet sind.

5. Motorstator nach Anspruch 1, **dadurch gekennzeichnet, dass** der lokale Leiter (22) die mehreren Verdrahtungsschichten (1) durchdringt, wobei das Wicklungsmodul (14) jeder Verdrahtungsschicht (1) ein erstes Ende (141) und ein zweites Ende (142) besitzt, wobei sich das erste Ende (141) mit dem mindestens einen lokalen Leiter (22) elektrisch verbindet und sich das zweite Ende (142) mit dem Durchgangsleiter (21) elektrisch verbindet.

6. Motorstator nach Anspruch 1, **dadurch gekennzeichnet, dass** eine Anzahl des mindestens einen lokalen Leiters (22) gleich einer Anzahl der mehreren Verdrahtungsschichten (1) ist, wobei ein beliebiger der lokalen Leiter (22) in eine der mehreren Verdrahtungsschichten (1) eindringt, wobei das Wicklungsmodul (14) jeder Verdrahtungsschicht (1) ein erstes Ende (141) und ein zweites Ende (142) besitzt, wobei sich ein beliebiger der lokalen Leiter (22) mit den ersten Enden (141) oder den zweiten Enden (142) der Wicklungsmodule (14) mindestens zweier der mehreren Verdrahtungsschichten (1) verbindet, wobei sich der Durchgangsleiter (21) mit dem zweiten Ende (142) des Wicklungsmoduls (14) einer der mehreren Verdrahtungsschichten (1) elektrisch verbindet und das zweite Ende (142), das sich mit dem Durchgangsleiter (21) verbindet, von dem mindestens einen lokalen Leiter (22) getrennt ist.

7. Motorstator nach Anspruch 1, **dadurch gekennzeichnet, dass** jede der Verdrahtungsschichten (1) eine Tragfläche (111), eine Bodenfläche (112) und mindestens ein Durchgangsloch (12), das sich von der Tragfläche (111) zu der Bodenfläche (112) erstreckt, besitzt, wobei die Durchgangslöcher (12) aller Verdrahtungsschichten (1) miteinander entlang mindestens einer axialen Linie ausgerichtet sind und der Durchgangsleiter (21) in den Durchgangslöchern (12) angeordnet ist.

8. Motorstator nach Anspruch 1, **dadurch gekennzeichnet, dass** jede der Verdrahtungsschichten (1) eine Tragfläche (111), eine Bodenfläche (112) und mindestens ein Leitungsloch (13), das sich von der Tragfläche (111) zu der Bodenfläche (112) erstreckt, besitzt, und der lokale Leiter (22) in den Leitungslöchern (13) aller Verdrahtungsschichten (1) angeordnet ist.

9. Motorstator nach Anspruch 1, **dadurch gekennzeichnet, dass** jede Verdrahtungsschicht (1) mindestens ein anderes Wicklungsmodul besitzt, wobei die Anzahl des mindestens einen elektrischen Verbindungsmoduls (2) und der Wicklungsmodule (14) jeder Verdrahtungsschicht (1) gleich einer Anzahl der Phasen eines Mehrphasenmotors, der den Motorstator verwendet, oder größer als diese ist.

## Revendications

1. Stator de moteur, comprenant :
une pluralité de couches de câblage (1), chaque couche de câblage (1) ayant une base isolante (11) et un module d'enroulement (14) formé sur la base isolante (11), avec le module d'enroulement (14) comprenant une pluralité de sections latérales s'étendant dans différentes directions,
dans lequel le stator de moteur est **caractérisé en ce qu'**il comprend en outre au moins un module de raccordement électrique (2), avec chaque module de raccordement électrique (2) ayant un conducteur traversant (21) et au moins un conducteur local (22), avec le conducteur traversant (21) pénétrant dans la pluralité de couches de câblage (1) et électriquement relié au module d'enroulement (14) d'au moins l'une des couches de câblage (1), avec le au moins un conducteur local (22) pénétrant dans au moins l'une des couches de câblage (1), et avec chaque conducteur local (22) relié électriquement aux modules d'enroulement (14) d'au moins deux des couches de câblage (1).

2. Stator de moteur selon la revendication 1, **caractérisé en ce que** la pluralité de sections latérales de chaque module d'enroulement (14) forme une bobine, le conducteur traversant (21) se trouvant sur l'un d'un intérieur et d'un extérieur de la bobine, tandis que le au moins un conducteur local (22) se trouve sur l'autre de l'intérieur et de l'extérieur de la bobine.

3. Stator de moteur selon la revendication 1, **caractérisé en ce que** la pluralité de sections latérales de chaque module d'enroulement (14) forme une bobine, et le conducteur traversant (21) et le au moins un conducteur local (22) sont prévus à l'extérieur de la bobine.

4. Stator de moteur selon la revendication 1, **caractérisé en ce que** la pluralité de sections latérales de chaque module d'enroulement (14) forme une bobine, et le conducteur traversant (21) et le au moins un conducteur local (22) sont prévus à l'intérieur de la bobine.

5. Stator de moteur selon la revendication 1, **caractérisé en ce que** le conducteur local (22) pénètre dans la pluralité de couches de câblage (1), le module d'enroulement (14) de chaque couche de câblage (1) ayant une première extrémité (141) et une seconde extrémité (142), la première extrémité (141) étant électriquement reliée au conducteur local au moins (22), et la seconde extrémité (142) étant électriquement reliée au conducteur traversant (21).

6. Stator de moteur selon la revendication 1, **caractérisé en ce qu'**un certain nombre du au moins un conducteur local (22) est égal au nombre de couches de câblage (1), n'importe lequel des conducteurs locaux (22) pénètre dans une des plusieurs couches de câblage (1), le module d'enroulement (14) de chaque couche de câblage (1) possède une première extrémité (141) et une seconde extrémité (142), n'importe lequel des conducteurs locaux (22) est électriquement relié aux premières extrémités (141) ou aux secondes extrémités (142) des modules d'enroulement (16) d'au moins deux des plusieurs couches de câblage (1), le conducteur traversant (21) est électriquement relié à la seconde extrémité (142) du module d'enroulement (14) de l'une des plusieurs couches de câblage (1), et la seconde extrémité (142) reliée au conducteur traversant (21) est séparée du au moins un conducteur local (22).

7. Stator de moteur selon la revendication 1, **caractérisé en ce que** chacune des couches de câblage (1) possède une surface de support (111), une surface inférieure (112) et au moins un orifice traversant (12) s'étendant de la surface de support (111) jusqu'à la surface inférieure (112), les orifices traversants (12) de toutes les couches de câblage (1) sont alignés les uns avec les autres le long d'au moins une ligne axiale, et le conducteur traversant (21) est prévu dans les orifices traversants (12).

8. Stator de moteur selon la revendication 1, **caractérisé en ce que** chacune des couches de câblage (1) possède une surface de support (111), une surface inférieure (112) et au moins un orifice de conduction (13) s'étendant de la surface de support (111) jusqu'à la surface inférieure (112), et le conducteur local (22) est prévu dans les orifices de conduction (13) de toutes les couches de câblage (1).

9. Stator de moteur selon la revendication 1, **caractérisé en ce que** chaque couche de câblage (1) possède au moins un autre module d'enroulement, les nombres du au moins un module de raccordement électrique (2) et des modules d'enroulement (14) de chaque couche de câblage (1) étant égaux ou supérieurs à un nombre de phases d'un moteur multi-phases utilisant le stator de moteur.
